# EUROPÄISCHE PATENTANMELDUNG

(11) **EP 3 296 347 A1**
(43) Veröffentlichungstag der Anmeldung: **21.03.2018**
(21) Anmeldenummer: 16189684.0
(22) Anmeldetag: 20.09.2016
(51) Int. Cl.: C08J 3/24, C07D 413/14, C08G 85/00, C08F 8/00, C09J 5/00

(54) **NEUARTIGER DIEN-BAUSTEIN FÜR DIE VERWENDUNG IN REVERSIBEL VERNETZENDEN (HETERO-)DIELS-ALDER-POLYMERSYSTEMEN**

(71) Anmelder: Evonik Degussa GmbH, 45128 Essen (DE)
(72) Erfinder: WAGNER, Michael, 45659 Rechlinghausen (DE); RICHTER, Christian, 48151 Münster (DE); SCHMIDT, Friedrich Georg, 45721 Haltern am See (DE); NETTELNBREKER, Hans-Jürgen, 45721 Haltern (DE); INHESTERN, Marcel, 45665 Recklinghausen (DE); CRON, Christina, 42555 Velbert (DE); BERNDT, Andreas, 01159 Dresden (DE); BÖHME, Frank, 01705 Pesterwitz (DE); POSPIECH, Doris, 01309 Dresden (DE)

(57) **Zusammenfassung**

Die Erfindung betrifft einen neuartigen Vernetzer-Baustein für die Verwendung in Diels-Alder-Vernetzungssystemen für reversibel vernetzende Polymersysteme, wobei vorliegend dieses System erstmalig aus nur einer Komponente bestehen kann.

## Beschreibung

### Gebiet der Erfindung

Die Erfindung betrifft einen neuartigen Vernetzer-Baustein für die Verwendung in (Hetero-)Diels-Alder-Vernetzungssystemen für reversibel vernetzende Polymersysteme.

Anwendungen für diesen Vernetzer-Baustein und seine Derivate finden sich zur Herstellung von reversibel vernetzenden Polymersystemen für Spritzgieß- und Extrusionsformmassen, zur Herstellung von Schäumen, für Anwendungen im Bereich des Additive Manufacturing, wie z.B. mit dem SLS- oder dem FDM-Verfahren. Daneben finden sich Anwendungen dieses Vernetzer-Bausteins und seiner Derivate für die Herstellung von Composite-Bauteilen, für die Herstellung bzw. vereinfachte Verarbeitung von reversibel vernetzten bzw. kettenverlängerten Polymer-Fasern, zur Herstellung von lagerstabilen Prepregs und daraus hergestellten Formkörpern (Composite-Bauteile) und auch für Klebstoffe und Coatings. Ebenso einsetzbar sind diese Bausteine für die Verknüpfung mit Elastomeren oder thermoplastischen Elastomeren für eine reversible Vernetzung der Elastomersysteme.

Die reversible Vernetzungsmethode ermöglicht dabei eine sehr schnelle Vernetzung oder Umsetzung zu höheren Molekulargewichten schon bei Raumtemperatur und eine zumindest zu einem relevanten Anteil erfolgende Lösung der Verbindungsstellen bei höheren Temperaturen, so dass eine thermoplastische Verarbeitbarkeit zurück gewonnen werden kann und z.B. die ursprünglich verklebten Substrate leicht wieder voneinander getrennt werden können. Dabei ist ein besonderer Aspekt, dass mehrere Zyklen einer Vernetzung und einer Lösung der Vernetzungsstellen mit dem vorliegenden System möglich sind.

### Stand der Technik

Methoden zur reversiblen Vernetzung von Polymeren sind für ein breites Feld von Anwendungen von großem Interesse. Beispielsweise in Klebanwendungen sind diverse Möglichkeiten für die Automobilindustrie oder die Halbleiterindustrie beschrieben. Aber auch bei der Konstruktion von Maschinen, feinmechanischen Geräten oder in der Bauindustrie sind solche Klebstoffe interessant. Neben Klebanwendungen können reversibel vernetzbare Polymere auch in Dichtstoffen, Beschichtungsmassen wie Lacken oder Farben oder bei der Herstellung von Formkörpern interessant sein.

In DE 198 32 629 und in DE 199 61 940 sind Verfahren beschrieben, bei dem Klebstoffe auf Epoxy-, Harnstoff-, (Meth)acrylat- oder Isocyanatbasis thermisch zersetzt werden. Die Klebstoffformulierung aus DE 199 61 940 enthält dazu eine thermisch instabile Substanz, die bei Erhitzen aktiviert wird. Die Klebschicht in DE 198 32 629 wird durch besonders hohen Energieeintrag zerstört. Die Desaktivierung der Klebschicht ist in beiden Fällen irreversibel.

In US 2005/0159521 bzw. in US 2009/0090461 ist ein Klebsystem beschrieben, das durch Bestrahlung mit aktinischer Strahlung radikalisch vernetzt und durch Ultraschall zerstört wird. Auch dieses Verfahren ist nach einem Klebezyklus irreversibel nicht mehr durchführbar.

In EP 2 062 926 sind in die Ketten eines Polyurethans für Klebanwendungen thermisch labile, sterisch gehinderte Harnstoffgruppen eingebaut, die durch Eintrag thermischer Energie zerstört wird und damit die Klebwirkung ausreichend zur Lösung der Verbindung reduziert wird.

In US 2009/0280330 ist ein wahrscheinlich mehrfach verwendbares Klebsystem beschrieben, das einen Zweischichtaufbau aufweist. Bei einer Schicht handelt es sich um eine Shape-Memory-Schicht, die thermisch flexibel oder gehärtet werden kann. Bei der anderen Schicht handelt es sich um einen Trockenkleber, der unterschiedliche Klebstärken in Abhängigkeit von der Struktur aufweist. Problem eines solchen Systems ist jedoch die aufwendig aufzubauende zweischichtige Struktur und die zu erwartende Restklebrigkeit nach Erhitzen der Shape-Memory-Schicht.

Unter dem Oberbegriff "Click Chemie" werden seit einigen Jahren vor allem in der akademischen Welt Methoden zum Aufbau von Blockcopolymeren erforscht. Dabei werden zwei unterschiedliche Homopolymere mit verknüpfbaren Endgruppen miteinander kombiniert und z.B. mittels einer Diels-Alder-Reaktion, Diels-Alder-analogen Reaktion bzw. einer anderen Cycloaddition miteinander verbunden. Ziel dieser Reaktion ist es, thermisch stabile, lineare und ggf. hochmolekulare Polymerketten aufzubauen. In Inglis et al. (Macromolecules 2010, 43, S.33-36) beispielsweise sind zu diesem Zweck Polymere mit Cyclopentadienylendgruppen, die aus mittels ATRP hergestellten Polymeren erhältlich sind, beschrieben. Diese Cyclopentadiengruppen können sehr rasch in hetero Diels-Alder Reaktionen mit Polymeren reagieren, welche elektronenarme Dithioester als Endgruppen tragen (Inglis et al. Angew. Chem. Int. Ed. 2009, 48, S. 2411-2414).

Die Verwendung von monofunktionellen RAFT-Polymeren zur Verknüpfung mit monofunktionellen Polymeren, die eine Dihydrothiopyran-Gruppe über eine Hetero-Diels-Alder-Reaktion findet sich in Sinnwell et al. (Chem. Comm. 2008, 2052-2054). Mit dieser Methode lassen sich AB-Diblockcopolymere realisieren. Schnelle Varianten dieser Hetero-Diels-Alder-Verknüpfung zur Synthese von AB-Blockcopolymeren mit einer nach einer RAFT-Polymerisation vorliegenden Dithioester-Gruppe und einer Dienyl-Endgruppe sind in Inglis et al. (Angew.Chem.Int.Ed. 2009, 48, S.2411-14) und in Inglis et al. (Macromol. Rapd Commun. 2009, 30, S.1792-98) beschrieben. Die analoge Herstellung von Multiarm-Sternpolymeren findet sich in Sinnwell et al. (J.Pol.Sci.: Part A: Pol.Chem. 2009, 47, S.2207-13).

In US 6,933,361 ist ein System zur Herstellung von einfach reparierbaren, transparenten Formkörpern beschrieben. Das System besteht aus zwei multifunktionellen Monomeren, die mittels einer Diels-Alder-Reaktion zu einem hochdichten Netzwerk polymerisieren. Dabei handelt es sich bei der einen Funktionalität um ein Maleinsäureimid und bei der anderen Funktionalität um ein Furan. Das thermische Schalten eines solchen hochdichten Netzwerks dient zur Reparatur desselbigen. Die Vernetzung findet bei Temperaturen oberhalb von 100 °C statt. Die partielle Rückreaktion bei noch höheren Temperaturen.

Bei Syrett et al. (Polym.Chem. 2010, DOI: 10.1039/b9py00316a) werden Sternpolymere zur Verwendung als Fließverbesserer in Ölen beschrieben. Diese weisen mittels einer reversiblen Diels-Alder-Reaktion steuerbare, selbstheilende Eigenschaften auf. Dazu werden monofunktionelle Polymethacrylat-Arme mit Polymethacrylaten kombiniert, die in der Mitte der Kette, als Fragment des eingesetzten Initiators über eine in einer reversiblen Diels-Alder-Reaktion verwendbare Gruppe verfügen.

In der EP 2 536 797 ist ein reversibel vernetzendes System aus zwei Komponenten A und B bestehend offenbart. Dabei handelt es sich bei Komponente A um eine Verbindung mit mindestens zwei dienophilen Gruppen und bei Komponente B um eine Verbindung mit mindestens zwei Dienfunktionalitäten. Die in der EP 2 536 797 offenbarten Kombinationen aus den Komponenten A und B sind in Bezug auf die Maximalzahl möglicher Schaltzyklen und die Lagerstabilität der Zusammensetzungen durchaus noch optimierbar.

Insbesondere für Anwendungen reversibel vernetzender Systeme im technischen Gebiet der Compositematerialien ist darüber hinaus weiterer Stand der Technik von Bedeutung. Faserverstärkte Materialien in Form von Prepregs werden bereits in vielen industriellen Anwendungen wegen ihrer bequemen Handhabung und der erhöhten Effizienz bei der Verarbeitung im Vergleich zu der alternativen wet-layup Technologie eingesetzt.

Industrielle Anwender solcher Systeme verlangen neben schnelleren Zykluszeiten und höheren Lagerstabilitäten - auch bei Raumtemperatur - zusätzlich eine Möglichkeit, die Prepregs zuzuschneiden, ohne dass bei automatisiertem Zuschnitt und Lay-up der einzelnen Prepreg-Lagen, die Schneidwerkzeuge mit der häufig klebrigen Matrixmaterial verunreinigt werden. Verschiedene Formgebungsprozesse, wie z.B. das Reaction-Transfer-Moulding-(RTM)-Verfahren beinhalten die Einbringung der Verstärkungsfasern in eine Form, das Schließen der Form, das Einbringen der vernetzbaren Harzformulierung in die Form und die anschließende Vernetzung des Harzes, typischerweise durch Wärmezufuhr.

Eine der Beschränkungen eines solchen Prozesses ist das relativ schwierige Einlegen der Verstärkungsfasern in die Form. Die einzelnen Lagen des Gewebes oder Geleges müssen zugeschnitten und den unterschiedlichen Geometrien der jeweiligen Formteile angepasst werden. Das kann sowohl zeitintensiv wie auch kompliziert sein, insbesondere wenn die Formkörper auch Schaum- oder andere Kerne enthalten sollen. Vorformbare Faserverstärkungen mit einfachem Handling und bestehenden Umformmöglichkeiten wären hier wünschenswert.

Neben Polyestern, Vinylestern und Epoxy-Systemen gibt es eine Reihe spezieller Harze im Bereich der vernetzenden Matrix-Systeme. Dazu zählen auch Polyurethan-Harze, die wegen ihrer Zähigkeit, Schadenstoleranz und die Festigkeit insbesondere zur Herstellung von Composite-Profilen über Pultrusionsverfahren eingesetzt werden. Als Nachteil wird häufig die Toxizität der verwendeten Isocyanate genannt. Jedoch auch die Toxizität von Epoxy-Systemen und der dort verwendeten Härter-Komponenten ist als kritisch anzusehen. Dies gilt insbesondere für bekannte Sensibilisierungen und Allergien.

Darüber hinaus haben die meisten Matrixmaterialien zur Herstellung von Prepregs für Composites den Nachteil, dass sie bei der Applikation auf das Fasermaterial entweder in fester Form, z.B. als Pulver, oder als hochviskose Flüssigkeit oder Schmelze vorliegen. In beiden Fällen erfolgt eine nur geringe Durchtränkung des Fasermaterials mit dem Matrixmaterial, was wiederum zu einer nicht optimalen Stabilität des Prepregs bzw. des Composite-Bauteils führen kann.

Prepregs und daraus hergestellte Composites auf der Basis von Epoxy-Systemen werden zum Beispiel in WO 98/50211, EP 0 309 221, EP 0 297 674, WO 89/04335 und US 4,377,657 beschrieben. In WO 2006/043019 wird ein Verfahren zur Herstellung von Prepregs auf der Basis von Epoxidharz-Polyurethanpulvern beschrieben. Des Weiteren sind Prepregs auf der Basis von pulverförmigen Thermoplasten als Matrix bekannt.

In WO 99/64216 werden Prepregs und Composite und eine Methode zu deren Herstellung beschrieben, bei der Emulsionen mit so kleinen Polymerpartikeln verwendet werden, dass eine Einzelfaserumhüllung ermöglicht wird. Die Polymere der Partikel haben eine Viskosität von mindestens 5000 centipoise und sind entweder Thermoplaste oder vernetzende Polyurethan-Polymere.

In der EP 0 590 702 werden Pulverimprägnierungen zur Herstellung von Prepregs beschrieben, bei denen das Pulver aus einem Gemisch aus einem Thermoplasten und einem reaktiven Monomer bzw. Prepolymeren besteht. Die WO 2005/091715 beschreibt ebenfalls die Verwendung von Thermoplasten zur Herstellung von Prepregs.

Prepregs, die unter Verwendung von Diels-Alder-Reaktionen und potentiell aktivierbaren Retro-Diels-Alder Reaktionen hergestellt wurden, sind gleichfalls bekannt. Bei A.M. Peterson et al. (ACS Applied Materials & Interfaces (2009), 1(5), 992-5) werden entsprechende Gruppen in Epoxy-Systemen beschrieben. Durch diese Modifizierung erhält man selbstheilende Eigenschaften der Bauteile. Analoge Systeme, die nicht auf einer Epoxy-Matrix beruhen, finden sich u.a. auch bei J.S. Park et al. (Composite Science and Technology (2010), 70(15), 2154-9) oder bei A.M. Peterson et al. (ACS Applied Materials & Interfaces (2010), 2(4), 1141-9). Keines der aufgeführten Systeme ermöglicht jedoch eine über eine Selbstheilung hinausgehende nachträgliche Modifizierung der Composites. Die klassische Diels-Alder-Reaktion ist unter den möglichen Bedingungen nur unzureichend zurückzuführen, so dass hier nur geringe Effekte, wie sie für eine Selbstheilung beschädigter Bauteile ausreichend sein können, möglich sind.

In der EP 2 174 975 und in EP 2 346 935 sind jeweils Composite Materialien, verwendbar als Laminat, mit bis-Maleinimid- und Furan-Gruppen beschrieben, welche thermisch recycelt werden können. Dem Fachmann ist leicht ersichtlich, dass ein solches System nur bei relativ hohen Temperaturen wieder aktiviert, d.h. zu mindestens einem großen Teil wieder entnetzt, werden kann. Bei solchen Temperaturen kommt es jedoch schnell zu weiteren Nebenreaktionen, so dass der Mechanismuswie beschrieben - nur zum Recyceln, nicht jedoch zum Modifizieren der Composites geeignet ist.

In WO 2013/079286 werden Composite-Materialien bzw. Prepregs zu deren Herstellung beschrieben, die Gruppen für eine reversible Hetero-Diels-Alder-Reaktion aufweisen. Diese Systeme sind reversibel vernetzbar und die Formteile damit sogar recycelbar. Jedoch lassen sich diese Systeme nur als flüssiges 100%-System oder aus einer organischen Lösung applizieren. Damit ist die Anwendbarkeit dieser Technologie deutlich eingeschränkt.

Alle beschriebenen Systeme basieren entweder auf organischen Lösungsmitteln oder werden als Schmelze oder als flüssiges 100%-System appliziert. Keines der beschriebenen Systeme kann jedoch in Form einer wässrigen Dispersion appliziert werden. Insbesondere solche wässrigen Systeme hätten jedoch große Vorteile in Hinblick auf die Arbeitssicherheit und zusätzlich verfügbare Verarbeitungstechnologien bei der Herstellung von Prepregs bzw. Composite-Materialien.

Weiterer Stand der Technik hinsichtlich der Oxazolin-Chemie ist im Folgenden gelistet:
Die Anbindung von Fettsäuren über die in Oxazoline umgewandelten Fettsäurecarbonsäure-Gruppen an carboxylgruppentragende Acrylatpolymere mit anschließender Epoxidierung der Doppelbindungen und irreversibler Vernetzung für Coatings wurde in D.L.Trumbo, J.T.Otto; J.Coat.Technol.Res.,5(1), 107-111, 2008 beschrieben.

In der DE 42 09 283 wird beschrieben, wie man Polymere mit Oxazolin-Gruppen über Propfreaktionen eines Oxazolins mit reaktiven Doppelbindungen versehen kann. Die so Oxazolingruppen tragenden Polymere können dann mit z.B. Dicarbonsäuren irreversibel vernetzt werden.

In der DE 34 02 280 werden Dichtungs- und Klebstoffe beschrieben, die durch die Verwendung von Bis-Oxazolinen in der Wärme gehärtet bzw.vernetzt werden können.

Thermoplastische technische Kunststoffe werden nach dem allgemeinen Stand der Technik mittels Spitzgieß- oder Extrusions-Techniken verarbeitet. Dabei ist eine irreversible Vernetzung der Materialien vor der Verarbeitung nicht möglich. Ebenso sind bei der Spitzgießverarbeitung hohe Molekulargewichte mit entsprechenden hohen Schmelzviskositäten unerwünscht bzw. nicht einsetzbar. Auf der anderen Seite sind die Eigenschaften des fertigen Bauteils direkt abhängig von dem Molekulargewicht der technischen Kunststoffe bzw. Polymere. Je höher das Molekulargewicht der Polymere ist, desto besser sind die mechanischen Eigenschaften wie z.B. die Schlagzähigkeit oder die Abrasionsbeständigkeit. Es gibt diverse Versuche die Molekulargewichte der zunächst eingesetzten Polymere zu erhöhen, meist erfolgt dies jedoch vor oder bei der Verarbeitung und erhöht damit auch die Viskosität im Prozess selbst.

Physikalische "Vernetzungen", wie sie durch die Kristallit-Bildung von teilkristallinen Polymeren beim Abkühlen nach dem Spritzgieß-Prozess, sind reversibel und können auch die mechanischen Eigenschaften verbessern bzw. verändern, verhindern jedoch nicht oder nur eingeschränkt ein Kriechen der Formmasse unter externer Belastung im Gegensatz zu chemisch verknüpften bzw. vernetzten Polymeren.

### Aufgabe

Aufgabe der vorliegenden Erfindung ist die Bereitstellung von Bausteinen für eine neue reversible Kettenverlängerungs- bzw. Vernetzungstechnologie für freie Carboxyl-Gruppen-enthaltende Polymere, die in unterschiedlichen Anwendungen und in einem breiten Formulierungsspektrum einsetzbar ist.

Weiterhin bestand die Aufgabe, Anbindungsmöglichkeiten für spezielle Dien-Komponenten zu finden, die mit bereits vorliegenden Endgruppen, insbesondere Carboxylgruppen, von gängigen technischen Kunststoffen einfach umsetzbar sind.

Darüber hinaus sollten die Syntheseschritte wie auch die erzielten Ausbeuten für eine wirtschaftliche Herstellung der vernetzenden Systeme zu einer einfachen und robusten Herstellungsmethode verbessert werden.

Weitere nicht explizit genannte Aufgaben ergeben sich aus dem Gesamtzusammenhang der nachfolgenden Beschreibung, Ansprüche und Beispiele.

### Lösung

Überraschend wurde gefunden, dass die Kombination von Diels-Alder-fähigen Strukturen mit einer Oxazolinstruktur für eine einfache und schnelle Anknüpfungsreaktion der Diels-Alder-Reaktionsfähigen Strukturen an Carboxy-Funktionalitäten eines bestehenden Polymers sehr gut geeignet ist. Es ist zwar aus der Literatur bekannt, dass Oxazoline unter Ringöffnung mit freien Carboxylgruppen unter Ausbildung von jeweils einer Ester- und einer Amid-Struktur reagieren. Diese Reaktion wurde allerdings bisher nicht für die Anbindung von Diels-Alder-Funktionalitäten beschrieben. Ebenso wenig ist das Reaktionsprodukt aus der Umsetzung der Sorbinsäure mit einem Amino-Alkohol zu einem Oxazolin bekannt.

Gelöst wurden die Aufgaben dabei durch Entwicklung einer neuartigen Methode zur Herstellung eines mindestens eine für die (Hetero-)Diels-Alder-Reaktion geeignete Diengruppe tragenden Polymers. Dieses Polymer kann beispielsweise Verwendung in einer Formulierung, geeignet zur Durchführung eines reversiblen Vernetzungsmechanismus, der unabhängig von den Formulierungsbestandteilen wie Bindemittel für verschiedenartige Polymere einsetzbar ist, finden. Überraschend wurde gefunden, dass die gestellten Aufgaben durch folgendes Herstellungsverfahren gelöst wird: ein Polymer, welches mindestens eine Carboxylgruppe aufweist, wird mit einer Komponente A zur Reaktion gebracht wird, wobei diese Komponente A mindestens eine Oxazolingruppe und mindestens eine konjugierte Diengruppe aufweist.

Bevorzugt weist die in der erfindungsgemäßen Methode verwendete Komponente A folgende Struktur auf:

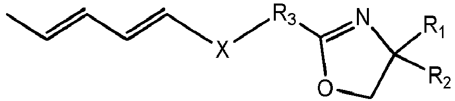

Dabei sind R₁ und R₂ unabhängig voneinander Wasserstoff oder ein linearer oder verzweigter Alkylrest mit einem bis 20 C-Atomen.

Die Gruppe R₃ ist optional. Für den Fall, dass diese vorhanden ist, handelt es sich dabei um einen linearen oder verzweigten Alkylrest mit ein bis 30 C-Atomen oder um eine ganz oder teilweise cyclische oder aromatische Struktur mit bis zu 30 C-Atomen.

Auch die Gruppe X ist optional und kann alternativ oder zusätzlich zur Gruppe R₃ vorliegen. Für den Fall einer vorliegenden Gruppe X handelt es sich bei dieser um ein C-Atom, welches ein oder zwei elektonenziehende Gruppen aufweist. Bevorzugt ist eine Ausführungsform, bei der die Gruppe X genau eine Carbonylgruppe aufweist.

Die einfachste und kleinste Einheit für einen solchen monofunktionellen Baustein als Komponente A für die Anbindung z.B. an Polyester oder Polyamide ist die nachfolgend dargestellte Verbindung des "Sorbinsäure-Oxazolins"(2-((1E,3E)-Penta-1,3-dien-1-yl)-4,5-dihydrooxazol, Alternativ: 2-((1E,3E)-Penta-1,3-dien-1-yl)-4,5-oxazolin)

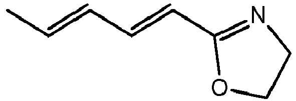

Im Folgenden ist eine mögliche Synthese des analogen (2-((1E,3E)-Penta-1,3-dien-1-yl)-4,4-dimethyl-4,5-dihydrooxazols dargestellt:

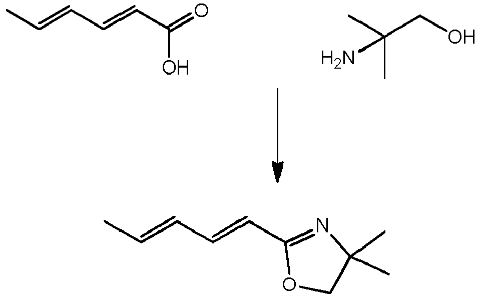

Eine besonders bevorzugte Variante des erfindungsgemäßen Verfahrens erfolgt unter Verwendung einer Komponente A folgender Struktur:

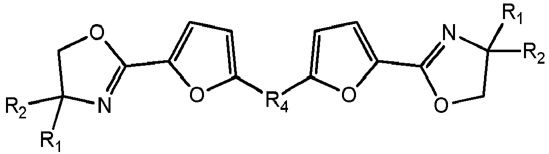

Dabei sind R₁ und R₂ unabhängig voneinander Wasserstoff oder ein linearer oder verzweigter Alkylrest mit einem bis 20 C-Atomen.
Die Formulierung "unabhängig voneinander" meint dabei im Rahmen der vorliegenden Beschreibung und Ansprüche dabei explizit auch, dass diese identisch zueinander sein können.

Gruppe R₄ liegt dabei als ein linearer oder verzweigter, dabei gesättigter oder teilweise ungesättigter Alkylrest mit ein bis 50 C-Atomen, eine ganz oder teilweise cyclische oder aromatische Struktur mit bis zu 50 C-Atomen eine Polyesterkette, eine Polyurethankette, eine Polyamidkette oder eine Polyetherkette vor.

In anderen, gleichsam bevorzugten Ausführungsformen der vorliegenden Erfindung wird als Komponente A eine Verbindung mit der Struktur (1) 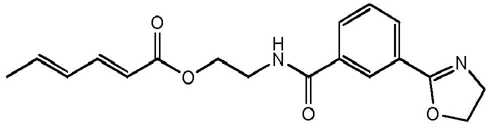 oder eine Verbindung mit der Struktur (2) 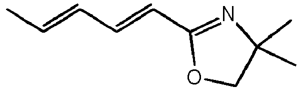 eingesetzt.

Die erste Struktur wird dabei beispielsweise aus Sorbin- bzw. Furfuryleinheiten durch die Umsetzung mit einem difunktionellen Oxazolin wie z.B. 1,3-Phenylen- Bisoxazolin 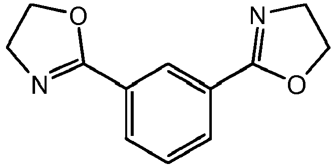 erhalten.

Dies kann beispielsweise nach folgendem Schema erfolgen:

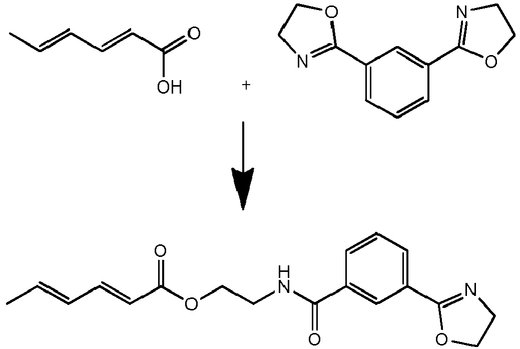

In weiteren, ebenso bevorzugten Ausführungsformen der vorliegenden Erfindung wird als Komponente A eine Verbindung mit der spezifischen Struktur (3) 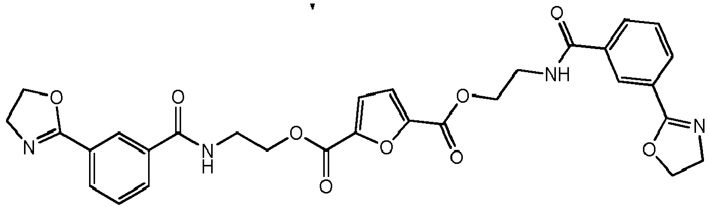 eingesetzt.

Weitere Beispiele sind die Reaktionen zwischen mono- oder difunktionellen Furan-CarbonsäureDerivaten und Bisoxazolinen mit dem Reaktionsprodukt der Struktur (4): 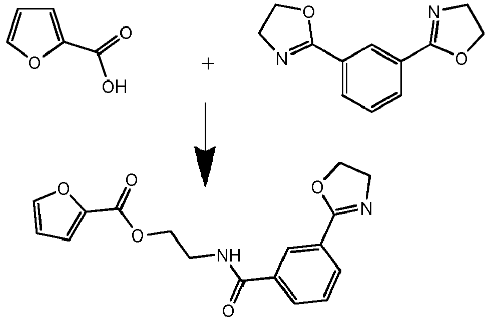 oder

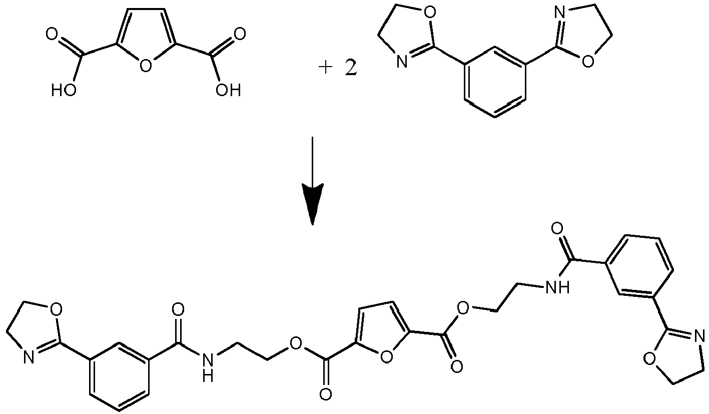

In diesen beispielhaften Reaktionen werden die für eine Diels-Alder-Verknüpfung verwendbaren Diene mit Oxazolin-Funktionalitäten versehen, um die Dien-Funktionalität an das Ende von Polymerketten zu verankern. Unter anderem eigene Versuche, z.B. Sorbinsäure direkt an einen Hydroxy-terminierten Polyester zu knüpfen, waren trotz Einsatzes von verschiedenen Katalysatoren und breiter Variation der Reaktionsbedingungen nicht erfolgreich. Mit dem erfindungsgemäßen Verfahren ist es dagegen überraschend gelungen, beispielsweise Sorbinsäure-Funktionalitäten beispielsweise an den Enden von Polyestern, Polyamiden, Polycarbonaten oder anderer Polykondensaten zu verankert, um dann diese Polymere mit geeigneten Dienophilen für eine reversible Kettenverlängerung bzw. Vernetzung reagieren lassen zu können.

Die vorliegenden Erfindung ist jedoch nicht auf die genannten Polykondensate beschränkt. Auch ist die Methode nicht darauf beschränkt, Polymere nur an den Endgruppen zu Funktionalisieren. Eine Umsetzung kann beispielsweise auch an Seitengruppen, einzelner Wiederholungseinheiten erfolgen. Damit ist ein Funktionalisierungsgrad von mehr als zwei auch durchaus möglich.

So kann es sich bei den Polymeren beispielsweise um Polyacrylate, Polymethacrylate, Polystyrole, Mischpolymerisate aus Acrylaten, Methacrylaten und/oder Styrolen, Polyacrylnitril, Polyether, Polyester, Polymilchsäuren, Polyamide, Polyesteramide, Polyurethane, Polycarbonate, amorphe oder teilkristalline Poly-α-Olefine, EPDM, EPM, hydrierte oder nicht hydrierte Polybutadiene, ABS, SBR, Polysiloxane und/oder Block-, Kamm- und/oder Sterncopolymeren dieser Polymere handeln.

Besonders bevorzugt handelt es sich jedoch bei dem Polymer vor der Umsetzung mit der Komponente A um einen Polyester, Polyamid, Polyurethan, Polycarbonat oder Polyesteramid mit überwiegend endständigen Säuregruppen.

Neben der beschriebenen Methode zur Herstellung von Verbindungen zur Verwendung in reversiblen Vernetzungs- oder Kettenverlängerungsreaktionen, sind auch die dargestellten Reaktionsprodukte (1) und (2) und die zuvor graphisch dargestellten Komponenten A (3) und (4) Bestandteil der vorliegenden Erfindung. Sämtliche Verbindungen (1), (2), (3) und (4) sind nicht im Stand der Technik beschrieben und damit neu.

Weiterhin ist auch ein Verfahren zur reversiblen Umsetzung der mittels der erfindungsgemäßen Methode hergestellten Diene in einer (Hetero-)Diels-Alder-Reaktion bei Raumtemperatur mit einem Dienophil unter Vernetzung oder einer Molekulargewichtserhöhung Bestandteil der vorliegenden Erfindung. Dabei kann das Produkt dieser Umsetzung bei einer höheren Temperatur von mehr als 100 °C unter Lösen von mindestens 15% der Vernetzungs- bzw. Verknüpfungsstellen mittels einer Retro-(Hetero-)Diels-Alder-Reaktion zumindets teilweise wieder zurückreagiert werden.

Besonders vorteilhaft ist es, wenn es sich bei dem Dienophil um eine Verbindung mit mindestens einer Kohlenstoff-Schwefel-Bindung, bevorzugt um eine oder mehrere Dithioester-Gruppen tragende Verbindung handelt.

Dabei gibt es für dieses Verfahren zwei grundlegende Ausführungsformen. In der ersten Ausführungsform wird das wie zuvor beschriebene, erfinderisch hergestellte Dien als eine Komponente, genau eine oder zwei Dien-Gruppen aufweisend, mit einer zweiten Verbindung, genau eine oder zwei Dienophil-Gruppen aufweisend, molekulargewichtserhöhend umgesetzt.
In der zweiten Ausführungsform wird das wie zuvor beschriebene, erfinderisch hergestellte Dien als eine Komponente, mindestens zwei Dien-Gruppen aufweisend, mit einer zweiten Verbindung, mindestens zwei Dienophil-Gruppen aufweisend, vernetzend umgesetzt. Dabei weist mindestens eine der beiden Komponenten mehr als zwei der jeweiligen Funktionalitäten auf.

Im Folgenden werden die für die reversible Kettenverlängerung bzw. Vernetzung beispielsweise einsetzbare Dienophil-Komponenten beschrieben. Bei einer dieser Dienophil-Komponenten kann es sich beispielsweise um die Strukur (5) handeln: 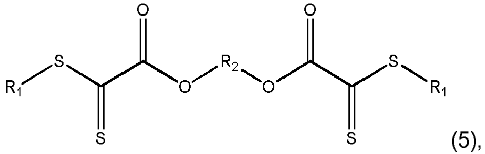 mit R₁ als einem Cₙ-Alkylen mit n = 1 bis 5 Kohlenstoffatomen und R₂ als einem Cₙ-Alkylenen mit n = 2 bis 10 Kohlenstoffatomen.

Ein weiteres Beispiel stellt die folgende Struktur (6) dar, die wie die zuvor spezifisch genannten Komponenten A bzw. die erfindungsgemäßen Diene gleichsam eine bis dato unbekannte Verbindung darstellt und damit Bestandteil der vorliegenden Erfindung ist: 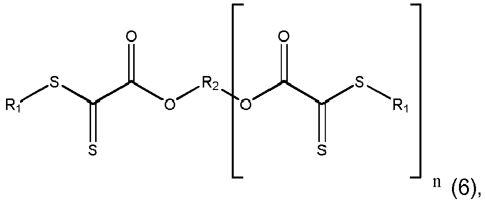 mit n als einer Zahl zwischen 2 und 6, mit R₁ als einem Cₙ-Alkylen mit n = 1 bis 5 Kohlenstoffatomen und mit R₂ als verzweigten Alkyl-Strukturen mit einer Anzahl von Kohlenstoffatomen zwischen 4 und 40.

Besonders bevorzugt sind die dabei beiden folgenden Strukturen (7), (8) und (9), wobei auch die Verbindung (9) wieder eine neue Verbindung darstellt und Bestandteil der vorliegenden Erfindung ist: 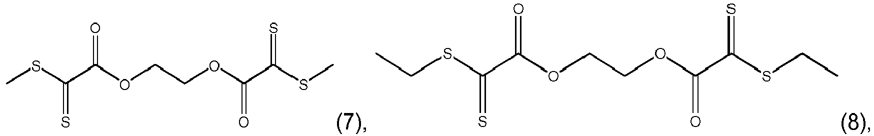 sowie

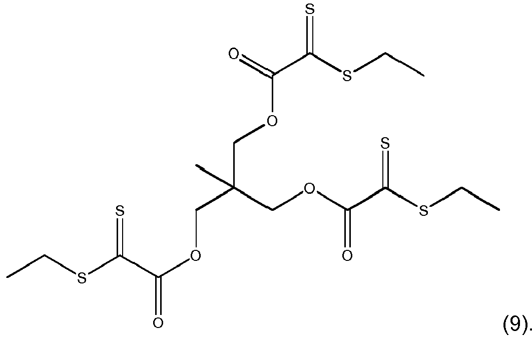

Als Dienophile, die beispielsweise insbesondere für die über Oxazoline-Strukturen angebundenen Furfuryl-Funktionalitäten einsetzbar sind, sind bekannten Maleinimid-Verbindungen verwendbar, wie z.B. 4,4'-bis-Maleimidodiphenylmethan (MDAB), 2,4-bis-Maleimidotoluol (TDAB), 2,2-bis(4-Maleimidophenoxyphenyl)propan, 1,6-bis-Maleimido-2,2,4-trimethylhexan, m-Xylylen-bis-maleimid (MXBI) oder bis(3-Methyl-5-ethyl-4-maleimidophenyl)methan. Diese und andere Beispiele können beispielsweise in Sergey E. Evsyukov et al , Polym. Adv. Technol. (2015) nachgelesen werden.

In dieser Variante wird insbesondere das meta-Xylylenbis-maleinimid bevorzugt:

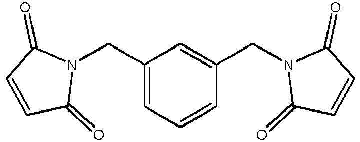

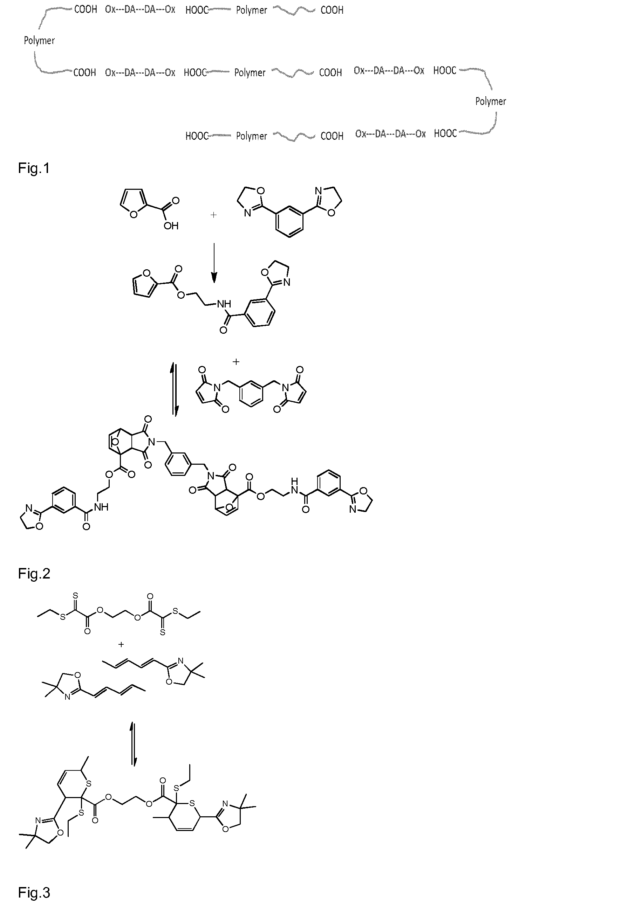

In einer ganz besonderen Variante B der vorliegenden Erfindung wird die erfindungsgemäße Methode nach dem ersten Schritt des erfindungsgemäßen Verfahrens durchgeführt. Mit anderen Worten erfolgt in dieser Variante die beschriebene Anbindung beispielsweise in Form der zumindest teilweisen reversiblen Vernetzung mittels (Hetero-)Diels-Alder-Reaktion, bevor diese Form mit den Polymeren über die Oxazolin-Carboxyl-Reaktion verknüpft wird. Eine solche Variante ist schematisch weiter unten in Fig. 1 dargestellt. Beispiele für solche sogenannten "Z-Linker", die die geschlossenen Diels-Alder-Addukte über Oxazolin-Anbindungsstellen mit Polymer-End- bzw. Seitengruppen verknüpft sind die folgenden Strukturen (10), erhalten aus Sorbinsäure-Oxazolin und DTOE (einem di-Thioester) und (11), erhalten aus dem Oxazolin der Furancarbonsäure und MXBI:

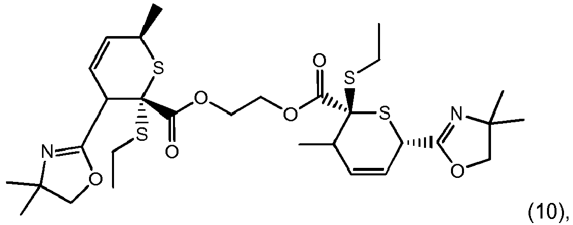

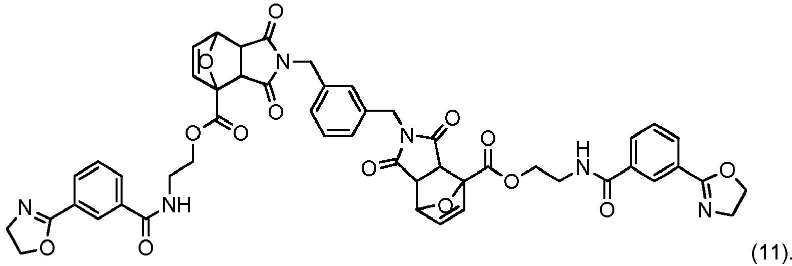

Weiterhin gibt es weitere Varianten der vorliegenden Erfindung. In einer dieser Varianten kann beispielsweise ein erfindungsgemäßes Kettenverlängerungs-Moleküle als Produkt der erfindungsgemäßen Methode, einmal auf der Basis eines Furansäure-Oxazolins mit einem Bismaleimid und einmal auf der Basis von eines Sorbinsäure-Oxazolins mit einem Dithioester reagieren. Dieses Beispiel ist schematisch in Fig.2 bzw. Fig.3 aufgezeigt. Über die Oxazolin-Gruppen dieser Diels-Alder-Bindungen erhaltenden Kettenverlängerungs-Bausteine erfolgt hier beidseitig die Verknüpfung mit den Carboxyl-terminierten Polymeren. Die Diels-Alder-Strukturen erlauben die reversible Aufspaltung in die Edukte und Wiederverknüpfung zu den kettenverlängerten Polymeren. Gleiches ist analog zur Kettenverlängerung auch mit multifunktionellen Dienophil- bzw- Dien-Einheiten für die Vernetzung von Carboxyl-terminierten Polymeren durchführbar.

Eine weitere Variante der vorliegenden Erfindung besteht darin, dass die zuvor beschriebene Anbindungs-, beispielsweise als Vernetzungsreaktion auch mit umgedrehten Funktionen in der Reaktion derart erfolgen kann, dass die Dienophilstruktur über eine Oxazolineinheiten an den terminalen Carboxylgruppen der Polymere verankert wird und die reversible Vernetzung über di- bzw. multifunktionale Dien-Bausteine erfolgt.

Eine weitere Variante der vorliegenden Erfindung besteht darin, dass Polymere mit multiplen Carboxy-Funktionalitäten, z.B. (Meth)Acrylat-(co-)Polymere mit (Meth)acrylsäure-Einheiten oder verzweigte (Co-)Polyester, Polyether, Polyamide, Polycarbonate oder auch Elastomere mit ein-polymerisierten oder gepropften Carboxy-Funktionalitäten in der Reaktion mit den erfindungsgemäßen Oxazolinfunktionalisierten Diels-Alder-Bausteinen einer reversiblen Vernetzung zugeführt werden können.

Die reversible Vernetzung, die mit der erfindungsgemäßen Formulierung möglich ist, ermöglicht eine sehr schnelle Umsetzung schon bei einer niedrigen ersten Temperatur und eine Lösung der Vernetzungsstellen bei deutlich höheren Temperaturen, so dass idealerweise eine thermoplastische Verarbeitbarkeit zurück gewonnen wird oder zumindest eine relevante Materialeigenschaft, wie die Kohesion in einem Klebstoff, derart geändert wird, dass eine andere Verarbeitung, wie das Ablösen einer Klebestelle, verfügbar wird.

Weiterhin können z.B. die ursprünglich vernetzten Schichten bei einem Einsatz im Bereich der als Laminate verpressten Einzelschichten in Composites leicht wieder voneinander getrennt oder z.B. die vernetzten Einzelschichten, welche beispielsweise als Prepregs vorliegen, umgeformt und zu einem Laminat verpresst werden können. Dabei ist ein besonderer Aspekt, dass mehrere Zyklen einer Vernetzung und einer Lösung der Vernetzungsstellen mit dem vorliegenden System möglich sind. Die beschriebenen Vernetzer- bzw. Kettenverlängerungs-Moleküle sind als Reinstoffe bei TemperaturErhöhung so stabil, dass sie nicht mit Schutzgruppen blockiert werden müssen.

Die im erfindungsgemäßen Verfahren eingesetzten Formulierungen weisen insbesondere die im Folgenden genannten besonderen Vorteile auf:
- Es sind keine Schutzgruppen / Blockierungsgruppen für das reaktive Dienophil bei der Synthese erforderlich.
- Sehr einfache und robuste Synthese mit preiswerten Edukten und hoher Ausbeute
- Die Formulierung ist auch ohne Schutzgruppen temperaturstabil bis über 200°C
- Die Retro--Diels-Alder-Reaktion erfolgt bei Temperaturen, die Schmelzpunkt bzw. Glastemperaturen des Gesamtsystems von größer 100°C ermöglichen.

Weitere Formulierungsbestandteile können der für das erfindungsgemäße Verfahren verwendeten Formulierung, zum Beispiel in Form einer Beschichtungs- oder Klebstoffzusammensetzung, zugegeben werden. Die Zusammensetzung umfasst erfindungsgemäß optional neben der Komponente A zusätzlich zugegebene Komponenten. Bei diesen zusätzlichen Komponenten kann es sich um spezifisch für die jeweilige Anwendung ausgesuchte Zuschlagsstoffe wie beispielsweise Füllstoffe, Pigmente, Additive, Verträglichkeitsvermittler, Cobindemittel, Weichmacher, Schlagzähmodifier, Verdicker, Entschäumer, Dispergieradditive, Rheologieverbesserer, Haftvermittler, Kratzfestadditive, Katalysatoren oder Stabilisatoren sowie optionale weitere Zuschlagsstoffe handeln.

In einer weiteren alternativen Ausführungsform enthält die Formulierung in dem erfindungsgemäßen Verfahren einen Katalysator, der die Aktivierungstemperatur der Retro-Diels-Alder-Reaktion absenkt. Bei diesen Katalysatoren kann es sich beispielsweise um Eisen oder eine Eisenverbindung handeln.

Die erfindungsgemäßen Verfahren können in verschiedensten Anwendungsgebieten zur Verwendung kommen. Das gleiche gilt für die Produkte der erfindungsgemäßen Methode oder die erfindungsgemäßen, neuen Verbindungen (1), (2), (3), (4), (6) und (9).

Die nachfolgende Liste zeigt einige bevorzugte Anwendungsgebiete beispielhaft auf, ohne die Erfindung diesbezüglich in irgendeiner Form einzuschränken.
Solche bevorzugten Anwendungsgebiete sind Klebstoffe, Dichtstoffe, spritzgussfähige oder extrudierbare Formmassen, Lacke, Farbe, Beschichtungen, (faserverstärkte) Verbundmaterialien, Polymerfasern, Materialien für Additive Manufacturing (3D-Printing, SLS, FDM), Tinten oder Öladditive wie Fließverbesserer.
Bei diesen Tinten handelt es sich beispielsweise um Zusammensetzungen, die thermisch appliziert werden und auf dem Substrat aushärten. Wenn man leitfähige Oligomere verwendet oder Additive zur Erzeugung einer Leitfähigkeit im Allgemeinen, wird eine elektrisch leitende Tinte erhalten, die z.B. per Bubble-jet - Verfahren verarbeitet werden kann.
Beispiele für spritzgussfähige oder extrudierbare Formmassen sind Polyester, Polycarbonat oder Polyamid, bei denen eine bei erhöhter Temperatur stattfindende retro-Diels-Alder-Entkupplung der (bei tieferer Temperatur bestehenden und sich beim Abkühlen wieder bildenden) Polymerkettenverknüpfung (Vernetzung oder Kettenverlängerung) eine für den Kunststoff-Spritzguss vorteilhafte verringerte Viskosität bzw. erste entstehende Fließfähigkeit erst ermöglicht. Die bei tieferer Temperatur und sich beim Abkühlen wieder bildenden Polymerkettenverknüpfungen erhöhen beispielsweise die mechanischen Eigenschaften.

Beispiele aus den Anwendungsgebieten Lacke, Beschichtungen und Farbe sind Zusammensetzungen, die z.B. poröse Materialien im niedrigviskosen Zustand besonders gut tränken oder benetzen können und in Folge der Kupplungsreaktion hochkohärente Materialien ergeben.

Ähnliche Charakteristika sind von Bedeutung für Klebstoffe, die hohe Kohäsion aufweisen sollten und dennoch leicht die Oberflächen der zu klebenden Materialien benetzen sollen.
Eine weitere Anwendung im Bereich Kleben ist zum Beispiel eine nur temporär benötigte, später wieder zu lösende Fügung, wie sie in verschiedenen Produktionsprozessen zum Beispiel im Automobilbau oder im Maschinenbau vorkommen kann.
Eine andere denkbare Anwendung ist das Verkleben von Bauteilen, die über die Lebensdauer des gesamten Produktes gesehen eine hohe Austauschwahrscheinlichkeit haben, und daher möglichst einfach und rückstandsfrei wieder zu entfernen sein sollten. Ein Beispiel für eine solche Anwendung ist das Verkleben von Automobilfrontscheiben. Weitere Beispiele sind Herstellprozesse im Bereich Elektronik, Informationstechnologie, in der Bau- oder der Möbelindustrie. Eine weitere interessante Anwendung für eine erfindungsgemäße Niedertemperatur-Entkupplung könnte im Bereich der Medizintechnik, oder der Orthopädietechnik liegen.
Ein besonderes Beispiel für Kleb- oder Dichtstoffe ist die Verwendung in Lebensmittelverpackungen, die sich beim Aufheizen, beispielsweise in einer Mikrowelle selbsttätig lösen lassen bzw. öffnen.

Ein Beispiel für Anwendungen im Bereich Rapid-Prototyping für die hier beschriebenen vernetzenden und entnetzenden Materialien sind im Bereich FDM (Fused Deposition Modeling) oder beim 3D-Druck per Ink-jet-Verfahren mit niedrigviskosen Schmelzen zu finden.

Die vorliegende Erfindung eignet sich insbesondere auch für die Herstellung von reversibel vernetzenden Polymer-Strukturen und insbesondere ein neuartiges System, das bei der Verwendung von hohen Molekulargewichten der eingesetzten Polymere oder bei hochreaktiven Systemen eine lagerstabile Darreichungsform darstellt. Die mit den erfindungsgemäßen Strukturen vernetzten z.B. als Dispersion vorliegenden Polymere können z.B. für die Imprägnierung von Fasermaterial, wie z.B. Carbonfasern, Glasfasern oder Polymerfasern zur Herstellung von Prepregs nach bekannten Verfahren verwendet werden.
Die Erfindung betrifft dabei insbesondere auch Emulsionspolymerisate, die mit den erfindungsgemäßen Vernetzer-Molekülen mittels Diels-Alder-Mechanismus intrapartikulär vernetzt werden. Die vernetzten Polymerisate können dann durch thermische Verarbeitung, beispielsweise als Composite-Matrix, durch eine retro-Diels-Alder- bzw. retro-Hetero-Diels-Alder-Reaktion ganz oder teilweise entnetzt und beim Abkühlen interpartikulär wieder vernetzt werden. Hierdurch sind lagerstabile Prepregs für Composite darstellbar. Aber auch andere Materialien, die duroplastische Eigenschaften bei Nutztemperatur haben, aber bei höherer Temperatur thermoplastische Verarbeitungseigenschaften besitzen, können so realisiert werden.

## Patentansprüche

1. Methode zur Herstellung eines mindestens eine für die (Hetero-)Diels-Alder-Reaktion geeignete Diengruppe tragenden Polymers, **dadurch gekennzeichnet, dass** ein Polymer, mindestens eine Carboxylgruppe aufweisend, mit einer Komponente A, aufweisend mindestens eine Oxazolingruppe und mindestens eine konjugierte Diengruppe, zur Reaktion gebracht wird.

2. Methode gemäß Anspruch 1, **dadurch gekennzeichnet, dass** die Komponente A folgende Struktur aufweist: 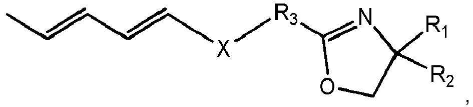
mit R₁ und R₂ als unabhängig voneinander Wasserstoff oder ein linearer oder verzweigter Alkylrest mit einem bis 20 C-Atomen,
mit optionaler Gruppe R₃, die, wenn vorhanden, ein linearer oder verzweigter Alkylrest mit ein bis 30 C-Atomen oder eine ganz oder teilweise cyclische oder aromatische Struktur mit bis zu 30 C-Atomen bedeutet und
mit optionaler Gruppe X als ein C-Atom mit einer oder zwei elektonenziehenden Gruppen, bevorzugt einer Carbonylgruppe.

3. Methode gemäß Anspruch 1, **dadurch gekennzeichnet, dass** die Komponente A folgende Struktur aufweist: 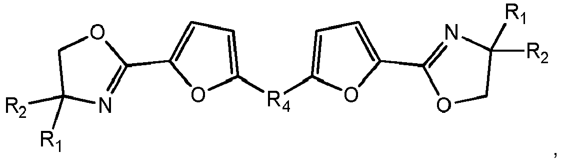
mit R₁ und R₂ als unabhängig voneinander Wasserstoff oder ein linearer oder verzweigter Alkylrest mit einem bis 20 C-Atomen und
mit Gruppe R₄, als ein linearer oder verzweigter, dabei gesättigter oder teilweise ungesättigter Alkylrest mit ein bis 50 C-Atomen, eine ganz oder teilweise cyclische oder aromatische Struktur mit bis zu 50 C-Atomen eine Polyesterkette, eine Polyurethankette, eine Polyamidkette oder eine Polyetherkette bedeutet.

4. Methode gemäß Anspruch 1 oder 2, **dadurch gekennzeichnet, dass** es sich bei Komponente A um eine der folgenden Verbindungen handelt: 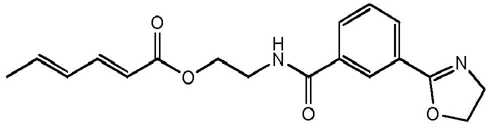 oder

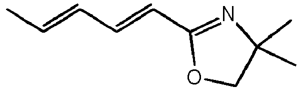

5. Methode gemäß Anspruch 1 oder 2, **dadurch gekennzeichnet, dass** es sich bei Komponente A um die folgende Verbindung handelt:

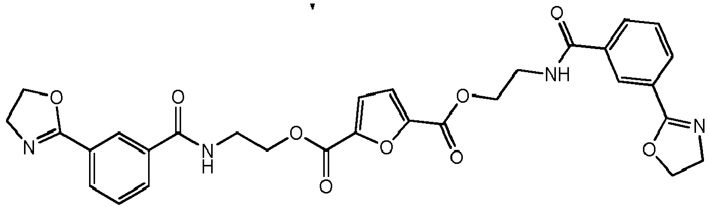

6. Methode gemäß mindestens einem der Ansprüche 1 bis 5, **dadurch gekennzeichnet, dass** es sich bei den Polymeren um Polyacrylate, Polymethacrylate, Polystyrole, Mischpolymerisate aus Acrylaten, Methacrylaten und/oder Styrolen, Polyacrylnitril, Polyether, Polyester, Polymilchsäuren, Polyamide, Polyesteramide, Polyurethane, Polycarbonate, amorphe oder teilkristalline Poly-α-Olefine, EPDM, EPM, hydrierte oder nicht hydrierte Polybutadiene, ABS, SBR, Polysiloxane und/oder Block-, Kamm- und/oder Sterncopolymeren dieser Polymere handelt.

7. Methode gemäß Anspruch 6, **dadurch gekennzeichnet, dass** es sich bei dem Polymer vor der Umsetzung mit der Komponente A um einen Polyester, Polyamid, Polyurethan, Polycarbonat oder Polyesteramid mit überwiegend endständigen Säuregruppen handelt.

8. Verfahren zur reversiblen Umsetzung, **dadurch gekennzeichnet, dass** ein mittels der Methode gemäß mindestens einem der Ansprüche 1 bis 7 hergestelltes Dien mittels einer (Hetero-)Diels-Alder-Reaktion bei Raumtemperatur mit einem Dienophil vernetzt oder molekulargewichtserhöhend umgesetzt wird und bei einer höheren Temperatur von mehr als 100 °C mindestens 15% der Vernetzungsstellen mittels einer Retro-(Hetero-)Diels-Alder-Reaktion wieder gelöst werden.

9. Verfahren gemäß Anspruch 8, **dadurch gekennzeichnet, dass** es sich bei dem Dienophil um eine Verbindung mit mindestens einer Kohlenstoff-Schwefel-Bindung, bevorzugt um eine oder mehrere Dithioester-Gruppen tragende Verbindung handelt.

10. Verfahren gemäß Anspruch 8 oder 9, **dadurch gekennzeichnet, dass** eine erste, gemäß mindestens einem der Ansprüche 1 bis 7 hergestellte Komponente, genau eine oder zwei Dien-Gruppen aufweisend, mit einer zweiten Verbindung, genau eine oder zwei Dienophil-Gruppen aufweisend, molekulargewichtserhöhend umgesetzt wird.

11. Verfahren gemäß Anspruch 8 oder 9, **dadurch gekennzeichnet, dass** eine erste, gemäß mindestens einem der Ansprüche 1 bis 7 hergestellte Komponente, mindestens zwei Dien-Gruppen aufweisend, mit einer zweiten Verbindung, mindestens zwei Dienophil-Gruppen aufweisend, vernetzend umgesetzt wird, wobei mindestens eine der beiden Komponenten mehr als zwei der jeweiligen Funktionalitäten aufweist.

12. Anwendung des Verfahrens gemäß zumindest einem der Ansprüche 8 bis 11 in Klebstoffen, Dichtstoffen, Formmassen, Schäumen, Lacken, Farben, Beschichtungen oder Tinten.

13. Anwendung des Verfahrens gemäß zumindest einem der Ansprüche 8 bis 11 in Composites für Anwendungen im Bereich der Bau-, der Automobil-, der Luft- und Raumfahrt-Industrie, der Energietechnik, wie Windkraftanlagen, im Boots- oder Schiffbau.
